# EUROPEAN PATENT SPECIFICATION

(11) **EP 4 271 015 B1**
(45) Date of publication and mention of the grant of the patent: **15.10.2025**
(21) Application number: 21922254.4
(22) Date of filing: 10.08.2021
(51) Int. Cl.: H04W 12/069, H04W 12/72, H04W 12/041, H04W 8/18, H04W 60/04

(54) **REGISTRATION METHOD AND APPARATUS, AUTHENTICATION METHOD AND APPARATUS, ROUTING INDICATOR DETERMINING METHOD AND APPARATUS, ENTITY, AND TERMINAL**
REGISTRIERUNGSVERFAHREN UND -VORRICHTUNG, AUTHENTIFIZIERUNGSVERFAHREN UND -VORRICHTUNG, ROUTINGINDIKATORBESTIMMUNGSVERFAHREN UND -VORRICHTUNG, EINHEIT UND ENDGERÄT
PROCÉDÉ ET APPAREIL D'ENREGISTREMENT, PROCÉDÉ ET APPAREIL D'AUTHENTIFICATION, PROCÉDÉ ET APPAREIL DE DÉTERMINATION D'INDICATEUR DE ROUTAGE, ENTITÉ ET TERMINAL

(30) Priority: 28.01.2021 CN 202110121462
(43) Date of publication of application: 01.11.2023
(73) Proprietor: ZTE Corporation, Shenzhen, Guangdong 518057 (CN)
(72) Inventor: LIU, Yuze, Shenzhen, Guangdong 518057 (CN); YOU, Shilin, Shenzhen, Guangdong 518057 (CN); PENG, Jin, Shenzhen, Guangdong 518057 (CN); XING, Zhen, Shenzhen, Guangdong 518057 (CN); LIN, Zhaoji, Shenzhen, Guangdong 518057 (CN)
(74) Representative: Vossius & Partner Patentanwälte Rechtsanwälte mbB
(86) International application number: PCT/CN2021/111666
(87) International publication number: WO 2022/160658

(56) References cited:
- EP-A1- 3 709 692
- WO-A1-2020/005925
- WO-A1-2020/149240
- WO-A1-2020/215668
- CN-A- 110 858 992
- CN-A- 111 147 421
- CN-A- 112 969 176
- HUAWEI ET AL: "Clarification on A-KID generation", vol. SA WG3, no. e-meeting; 20210118 - 20210129, 11 January 2021 (2021-01-11), XP051968205, Retrieved from the Internet <URL:https://ftp.3gpp.org/tsg_sa/WG3_Security/TSGS3_102e/Docs/S3-210253.zip S3-210253- Clarification on A-KID generation.docx> [retrieved on 20210111]
- NEC ET AL: "Structure of SUPI and SUCI", vol. CT WG4, no. Osaka, Japan; 20180521 - 20180525, 1 June 2018 (2018-06-01), XP051569684, Retrieved from the Internet <URL:http://www.3gpp.org/ftp/tsg%5Fct/TSG%5FCT/TSGC%5F80%5FLa%5FJolla/Docs/CP%2D181132%2Ezip> [retrieved on 20180601]
- ZTE CORPORATION: "Defining AKMA key identifier for AKMA Anchor Key on demand procedures", 3GPP DRAFT; S3-200673, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20200414 - 20200417, 3 April 2020 (2020-04-03), Mobile Competence Centre ; 650, route des Lucioles ; F-06921 Sophia-Antipolis Cedex ; France , XP051868581
- HUAWEI;HISILICON: "Clarification on AAnF Selection", 3GPP DRAFT; S3-210254, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20210118 - 20210129, 11 January 2021 (2021-01-11), Mobile Competence Centre ; 650, route des Lucioles ; F-06921 Sophia-Antipolis Cedex ; France , XP051968206

## Description

### TECHNICAL FIELD

The present application relates to the field of wireless communication networks, for example, a registration method and apparatus, an authentication method and apparatus, a routing indicator determination method and apparatus, an entity, and a terminal.

### BACKGROUND

The fifth generation (5G) mobile communication network architecture consists of multiple network functions (NFs). For example, a unified data management (UDM) is the permanent repository of user subscription data and is located in a user subscription home network. An authentication credential repository and processing function (ARPF) stores a long-term security credential for authentication, which is used as an input for performing key operations. An authentication server function (AUSF) interacts with the ARPF and provides an authentication service. An application function (AF) manages sessions at the user equipment (UE). In addition, the 5G network architecture also introduces an authentication and key management for applications (AKMA) anchor function (AAnF). The AAnF is located in the home network and is mainly used for generating a session key between the UE and the AF and maintaining the security context with the UE. The AKMA technology provides end-to-end security protection from the user to the application for the 5G network.

Based on the authentication of the UE by the AUSF, the UE may register with the AAnF and thus access the 5G network. In this process, both the UE and the AUSF generate AKMA-key identification (A-KID) and the associated AKMA anchor key according to a routing indicator (RID). However, it cannot be ensured that the AUSF gets a valid RID, and the A-KID generated by the AUSF may not match the A-KID generated by the UE. In this case, the network side cannot accurately position the AAnF or the UDM, resulting in the following: whether the user has performed AMKA subscription or cannot find the AKMA security context of the user cannot be determined, the authentication or registration for the user fails, and the user cannot obtain safe and reliable services.

3GPP Draft S3-210253, WO 2020/005925 A1 and EP 3 709 692 A1 are related prior art documents.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. The present application provides a registration method and apparatus, an authentication method and apparatus, a routing indicator determination method and apparatus, an entity, and a terminal to ensure that RID is valid and to improve the reliability of user registration and access.

An embodiment of the present application provides a registration method. The registration method is applied to an AUSF and includes the following.

Authentication information of a UDM is acquired; an RID is determined according to the authentication information; and a registration request is sent to a key anchor function according to the RID.

An embodiment of the present application provides an authentication method. The authentication method is applied to a UDM and includes the following.

A stored RID is checked according to an authentication request of an AUSF; and authentication information is sent to the AUSF according to a check result.

An embodiment of the present application provides a routing indicator determination method. The routing indicator determination method is applied to a UE or an AUSF and includes the following. Authentication information of a UDM is acquired; and an RID is determined according to the authentication information.

An embodiment of the present application further provides a registration apparatus. The registration apparatus includes a first acquisition module, a first determination module, and a registration module.

The first acquisition module is configured to acquire authentication information of a UDM. The first determination module is configured to determine an RID according to the authentication information. The registration module is configured to send a registration request to a key anchor function according to the RID.

An embodiment of the present application further provides an authentication apparatus. The authentication apparatus includes a check module and an authentication module.

The check module is configured to check a stored RID according to an authentication request of an AUSF. The authentication module is configured to send authentication information to the AUSF according to a check result.

An embodiment of the present application further provides a routing indicator determination apparatus. The routing indicator determination apparatus includes a second acquisition module and a second determination module.

The second acquisition module is configured to acquire authentication information of a UDM. The second determination module is configured to determine an RID according to the authentication information.

An embodiment of the present application further provides a function. The function includes a memory, a processor, and a computer program stored in the memory and executable by the processor, where when executing the program, the processor performs the registration method, the authentication method, or the routing indicator determination method.

An embodiment of the present application further provides a terminal. The terminal includes a memory, a processor, and a computer program stored in the memory and executable by the processor, where when executing the program, the processor performs the routing indicator determination method.

An embodiment of the present application further provides a computer-readable storage medium storing a computer program which, when executed by a processor, causes the processor to perform the registration method, the authentication method, or the routing indicator determination method.

### BRIEF DESCRIPTION OF DRAWINGS

FIG. 1 is a schematic diagram of the authentication and key management service architecture of an application according to an embodiment;
FIG. 2 is a flowchart of a registration method according to an embodiment;
FIG. 3 is a flowchart of the generation of A-KID according to an embodiment;
FIG. 4 is a flowchart of the generation of A-KID according to another embodiment;
FIG. 5 is a flowchart of an authentication method according to an embodiment;
FIG. 6 is a flowchart of a routing indicator determination method according to an embodiment;
FIG. 7 is a structural diagram of a registration apparatus according to an embodiment;
FIG. 8 is a structural diagram of an authentication apparatus according to an embodiment;
FIG. 9 is a structural diagram of a routing indicator determination apparatus according to an embodiment;
FIG. 10 is a structural diagram of hardware of a function entity according to an embodiment; and
FIG. 11 is a structural diagram of hardware of a terminal according to an embodiment.

### DETAILED DESCRIPTION

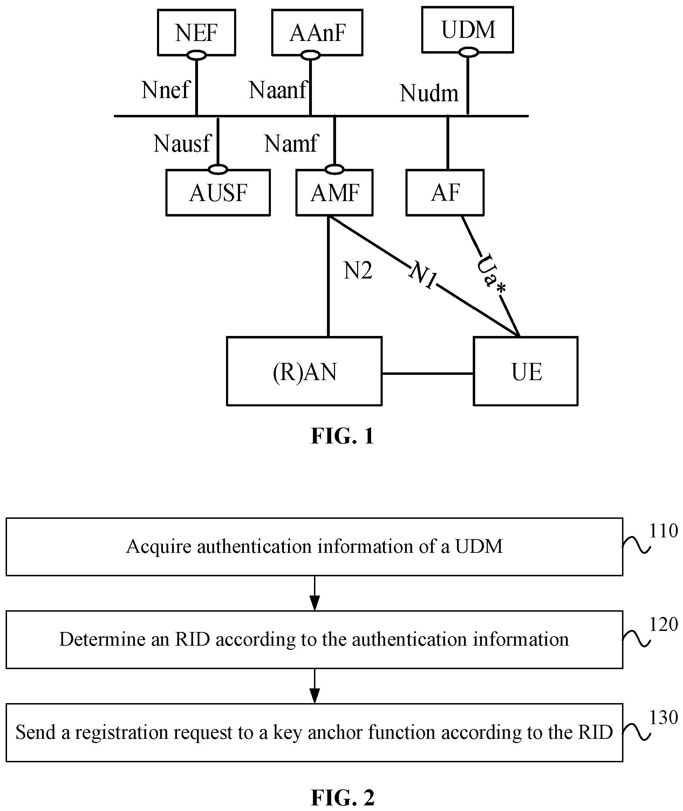

The present application is described hereinafter in conjunction with drawings and embodiments. FIG. 1 is a schematic diagram of the authentication and key management service architecture of an application according to an embodiment. As shown in FIG. 1, the UE communicates with an access network (AN) or a radio access network (RAN) through a variety of network functions. An access management function (AMF) is configured for managing a requirement of the user for accessing the network and is responsible for the non-access stratum (NAS) signaling management from the terminal to the network and user mobility management. The AMF has a security anchor function and can interact with the AUSF and the UE and receive an intermediate key established for the UE authentication process. The AMF can acquire security-related data from the AUSF for an authentication method based on a universal subscriber identity module (USIM). The AF is configured for managing sessions at the UE.

The UDM is configured for storing the user subscription data and is located in the user subscription home network. The ARPF stores a long-term security credential for authentication, which is used as an input for performing key operations. The AUSF interacts with the ARPF and provides an authentication service. The AAnF is located in the home network and is mainly configured for generating a session key between the UE and the AF and maintaining the security context with the UE. The AAnF is similar to the bootstrapping server function (BSF) in the general bootstrapping architecture (GBA); and an interface Ua* between the UE and the AF is similar to a Ua interface in the GBA. Nnef, Nausf, Naanf, and Namf are service-based interfaces for a network exposure function (NEF), the AUSF, the AAnF, and the AMF, respectively. The NEF is configured for managing the external open network data, and external applications can access the internal data of the core network through the NEF.

Before accessing the network, the UE requests the AUSF and the UDM for key negotiation authentication. The AUSF is configured for generating the session key between the UE and the AF and maintaining the security context with the UE, and the UDM is configured for storing the user subscription data and determining whether the user is an AKMA subscription user. The UE may generate the A-KID and the associated AKMA anchor key (noted as K_{AKMA}) according to the RID after passing the key negotiation authentication, and send the A-KID and K_{AKMA} to the AAnF through the AF. In this process, the AUSF also uses the RID to generate the A-KID and sends a subscription permanent identifier (SUPI) of the user and the generated A-KID and K_{AKMA} to the AAnF, and the AAnF responds to the AUSF to complete the authentication and registration for the user.

On the one hand, the AAnF acquires the A-KID and K_{AKMA} generated by the UE from the AF; on the other hand, the AAnF acquires the A-KID and K_{AKMA} generated by the network side from the AUSF. However, the RID of the AUSF may be null or an invalid value and may be inconsistent with the RID used by the UE, resulting in the following: the network side cannot accurately position the AAnF or the UDM, whether the user has performed AMKA subscription or cannot find the AKMA security context of the user cannot be determined, the authentication or registration for the user fails, and the user cannot obtain safe and reliable services.

An embodiment of the present application provides a registration method that can be applied to the AUSF, and the AUSF may determine a valid RID according to authentication information of the UDM and provide valid information to the AAnF, thereby achieving user registration and providing safe and reliable services to the user.

FIG. 2 is a flowchart of a registration method according to an embodiment. As shown in FIG. 2, the method provided in this embodiment includes steps 110 to 130.

In step 110, authentication information of a UDM is acquired.

In this embodiment, during the authentication process, the AUSF interacts with the UDM to acquire the authentication information to determine a valid RID. The authentication information may or may not include the RID and may include RID indication information, where the RID indication information is configured for instructing the AUSF how to determine the RID.

In an embodiment, the authentication information may also include an authentication credential, such as an authentication vector (AV) of an authentication and key agreement (AKA), and the authentication method may use the Nudm_UE Authentication_Get Request service operation.

In step 120, an RID is determined according to the authentication information.

The RID may consist of 1 to 4 decimal digits. The combination of the RID and a home network identifier may form the A-KID used for enabling the transmission of user data or signaling to the AUSF and the UDM in the specified network. If the RID is invalid, the A-KID is invalid. If the UDM cannot be found accurately at the network side, then whether the user has performed AMKA subscription cannot be determined. If the AAnF cannot be found accurately, the AKMA security context of the user cannot be found.

In this embodiment, the AUSF may determine the RID according to the authentication information of the UDM. The authentication information may include the RID; and in this case, the AUSF may send a registration request to the AAnF directly according to the RID acquired from the UDM. The authentication information may also not include the RID; and in this case, the AUSF may determine the valid RID according to a pre-configured policy or through negotiation with the UE. Alternatively, the authentication information may include the RID indication information, and the AUSF determines the RID according to the indication information.

In an embodiment, the UDM may check whether the UDM stores the RID. If the UDM stores the RID, the stored RID is sent to the AUSF through the authentication information. If the UDM does not store the RID, information about the RID is not sent, or the RID indication information may be sent.

In step 130, a registration request is sent to a key anchor function according to the RID.

In this embodiment, after determining the valid RID, the AUSF may send the SUPI of the user and the valid A-KID and K_{AKMA} generated according to the RID to the AAnF to request the AAnF to complete the registration for the user.

In an embodiment, the authentication information includes the RID.

In this embodiment, the UDM checks whether the UDM stores the RID. If the UDM stores the RID, the RID is sent to the AUSF through the authentication information, and the AUSF can directly determine the RID according to the authentication information and generate the A-KID and the associated K_{AKMA} according to the RID.

In an embodiment, the authentication information does not include the RID; and step 120 includes the step described below.

According to a pre-configured policy or a result of negotiation with a UE, corresponding significant digits are selected from a mobile subscriber identification number (MSIN) as the RID. In this embodiment, the RID is not found by the UDM, so the authentication information does not include the RID. The AUSF does not acquire the RID in the authentication information and may select specific digits from the MSIN as the RID to make the RID valid and thus generate the valid A-KID to provide a reliable basis for user registration. The number of significant digits selected and the position of the selected value in the MSIN (for example, the first few digits, the last few digits, the middle few digits, or the specific few digits) may be determined according to the pre-configured policy or through negotiation with the UE or determined according to the RID indication information in some embodiments.

The UE may also select the corresponding significant digits from the MSIN as the RID and generate the A-KID accordingly, and the value selected by the UE from the MSIN is the same as the value selected by the AUSF from the MSIN.

In an embodiment, the step of selecting the corresponding significant digits from the MSIN as the RID includes one of the steps described below.
1) First significant digits are selected from the MSIN as the RID. For example, if the RID has a total of four digits, then the AUSF selects the first to the fourth digits from the MSIN as the RID.
2) Corresponding significant digits from a specified position are selected from the MSIN as the RID. For example, if the RID has a total of four digits, then the AUSF selects the third to the sixth digits from the MSIN as the RID. 3) Last significant digits are selected from the MSIN as the RID. For example, if the RID has a total of four digits, then the AUSF selects the last four digits from the MSIN as the RID.

In an embodiment, a home location register (HLR) may be determined using the first letter or first few digits of the MSIN, and the HLR corresponds to the UDM, so the first letter or first few digits of the MSIN may be filled in the RID. If the number of digits of the RID is four and the MSIN is 0123456789, according to the pre-configured policy of selecting the first four digits, "0123" may be filled in the RID so as to obtain the updated A-KID. For another example, if the pre-configured policy is to select the third to sixth digits of the MSIN, then "2345" is filled in the RID.

In an embodiment, the authentication information includes the RID indication information, and the RID indication information is configured for specifying significant digits in the MSIN.

In this embodiment, the RID is not found by the UDM, and the RID indication information is sent to the AUSF through the authentication information to instruct the AUSF to select the value of the corresponding significant digits from the MSIN as the RID.

In an embodiment, step 120 includes using the corresponding significant digits in the MSIN specified by the RID indication information as the RID.

In this embodiment, the UDM specifies the corresponding significant digits in the MSIN in the RID indication information. For example, the UDM specifies the first significant digits, the last significant digits, or the corresponding significant digits from the specified position in the MSIM as the RID.

In an embodiment, the authentication information includes a home network public key identifier (HNPKI).

In this embodiment, the UDM may also indicate the HNPKI to the AUSF through the authentication information, indicating an identifier of a public key provided by the home network for protecting the SUPI. The value of the HNPKI is 0 in the case of no protection.

In an embodiment, the method further includes step 100.

In step 100, an authentication request is sent to the UDM, where the authentication request includes a subscription concealed identifier (SUCI) or an SUPI.

In this embodiment, the AUSF sends the authentication request to the UDM, and the authentication request includes a user identifier, where the user identifier includes two types: the SUCI or the SUPI.

The SUPI may be an international mobile subscriber identification number (IMSI) or a network access identifier (NAI).

The SUCI consists of six components.

The SUPI type has a value of 0 to 7. The SUPI type with a value of 0 indicates the IMSI, and the SUPI type with a value of 1 indicates the NAI. The home network identifier is configured for identifying a home network user. In the case where the SUPI is the IMSI, the IMSI consists of a mobile country code (MCC), a mobile network code (MNC), and the MSIN. The RID is assigned by a home network operator. The RID and the home network identifier indicate transmission of network signaling to the AUSF and UDM serving the subscriber. A protection scheme identifier indicates Null-Scheme or Non-Null-Scheme. The HNPKI indicates the identifier of the public key provided by the home network for protecting the SUPI and has a value of 0 in the case of no protection. The Scheme Output includes the MSIN of the IMSI or the NAI in the case of no protection and includes the values of the MSIN and the NAI using elliptic curve encryption in the case of protection.

In an embodiment, step 130 includes steps 131 and 132.

In step 131, the A-KID is generated according to the RID.

In step 132, the registration request is sent to the key anchor function according to the A-KID.

In this embodiment, the AUSF sends the SUPI of the user and the valid A-KID and K_{AKMA} generated according to the RID to the AAnF to request the AAnF to complete the registration for the user.

In this embodiment, the key identification A-KID of the anchor key K_{AKMA} includes two parts: Username and Realm. Username includes the RID and a user temporary identifier, and Realm includes the home network identifier.

In this embodiment, the AUSF uses the Naanf_AKMA _KeyRegistration Request service operation to send the SUPI of the user, the A-KID and K_{AKMA} generated according to the RID to the AAnF, and the AAnF completes the registration for the user and uses the Naanf_AKMA _KeyRegistration Response service operation to send a response message to the AUSF.

In this embodiment, the key to generating the A-KID is to determine the valid RID, that is, to replace the invalid RID in Username with the corresponding significant digits in the MSIN. Corresponding significant digits are selected from the MSIN and filled in the RID according to the pre-configured policy to make the RID valid, thereby updating the A-KID.

The case where the value of the corresponding significant digits are selected from the MSIN and filled in the RID is described below through examples.

For example, the IMSI is 234150123456789, that is, MCC = 234, MNC = 15, MSIN = 0123456789, the RID is 000, the HNPKI is 27, the unprotected SUCI is 0, 234, 15, 000, 0, 0, and 0123456789, and the protected SUCI is 0, 234, 15, 000, 1, 27, <elliptic curve cryptography ephemeral public key value>, <encryption 0123456789>, and <media access control (MAC) tag value>. In this case, the RID is 000, which is an invalid RID, and the number of digits is 3. Then, according to the pre-configured policy or the result of negotiation with the UE, the fourth to sixth digits are selected from the MSIN, "345" is filled in the RID, and the RID is updated to 345 in the updated A-KID. For another example, the IMSI is 234150123456789, that is, MCC = 234, MNC = 15, MSIN = 0123456789, the RID is 9999, the HNPKI is 27, the unprotected SUCI is 0, 234, 15, 9999, 0, 0, and 0123456789, and the protected SUCI is 0, 234, 15, 9999, 1, 27, <elliptic curve cryptography ephemeral public key value>, <encryption 0123456789>, and <MAC tag value>. In this case, the RID is 9999, assuming that 9999 is the set default value or invalid value, the RID is invalid and the number of digits is 4. Then, according to the pre-configured policy, the first four digits may be selected from the MSIN, "0123" is filled in the RID, and the RID is 0123 in the updated A-KID. If the pre-configured policy is to select the third to sixth digits from the MSIN, then "2345" is filled in the RID, and the RID is 2345 in the updated A-KID.

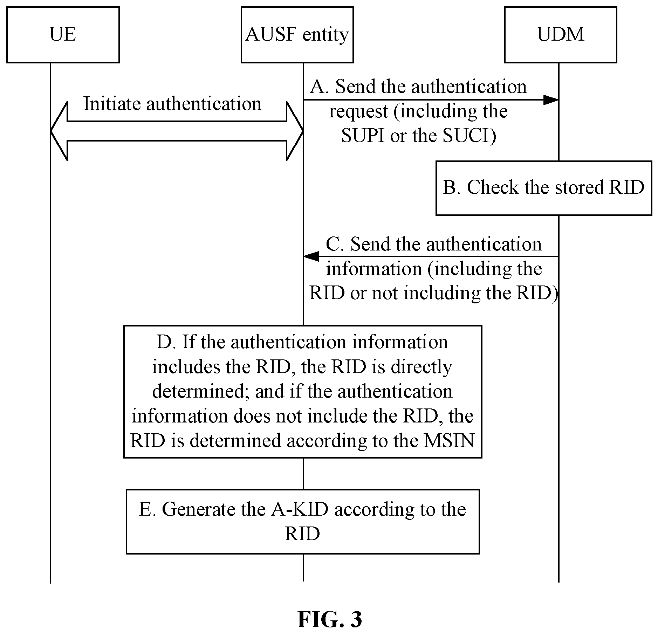

FIG. 3 is a flowchart of the generation of A-KID according to an embodiment. In this embodiment, the user is an AKMA subscription user, and both the UE and the AUSF can determine the valid RID. As shown in FIG. 3, the process is described below.
A. During the authentication process, the AUSF sends the authentication request to the UDM, where the authentication request includes the SUCI/SUPI of the user.
B. The UDM checks whether the UDM stores the RID of the user.
C. If the UDM stores the RID of the user, the UDM sends the value of the RID to the AUSF through the authentication information; and if the UDM does not store the RID of the user, the authentication information sent by the UDM does not include the RID.
D. If the AUSF receives the RID from the UDM, the RID is determined directly; and if the AUSF does not receive the RID, the corresponding significant digits are selected from the MSIN as the RID of the user. The method in which the AUSF selects the value from the MSIN may be determined through the pre-configured policy or the negotiation with the UE at the network side. The actual number of digits selected is determined by the number of digits of the RID.
E. The A-KID is generated according to the RID.

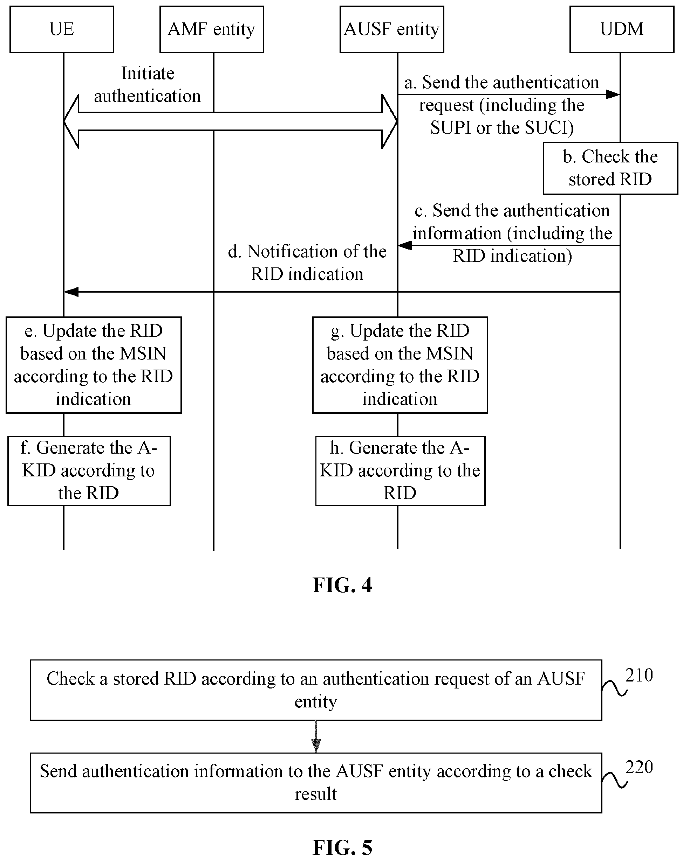

FIG. 4 is a flowchart of the generation of A-KID according to another embodiment. As shown in FIG. 4, the process is described below.
a. During the authentication process, the AUSF sends the authentication request to the UDM, where the authentication request includes the SUCI/SUPI of the user.
b. The UDM checks whether the UDM stores the RID of the user.
c. If the UDM does not store the RID of the user, the UDM sends the authentication information to the AUSF through the authentication message, where the authentication information includes the RID indication for indicating which significant digits are selected from the MSIN as the RID.
d. The UDM sends the RID indication to the UE, where the RID indication may be sent to the UE through the AMF.
e. The UE selects the corresponding significant digits from the MSIN as the RID according to the RID indication.
f. The UE generates the A-KID according to the RID.
g. The AUSF selects the corresponding significant digits from the MSIN as the RID according to the RID indication of the UDM.
h. The AUSF generates the A-KID according to the RID.

In an embodiment, the AUSF determines an application key K_{AF} according to K_{AKMA}, based on which the network side can accurately position the AAnF and the UDM, so as to accurately start the application layer encryption, achieve the registration and authentication for the user, and ensure user access security, and the network side provides safe and reliable services to the terminal based on the AKMA architecture.

An embodiment of the present application further provides an authentication method that can be applied to the UDM, where the UDM checks whether the UDM stores the RID and sends corresponding authentication information to the AUSF for the AUSF to determine the valid RID, thereby providing valid information to the AAnF, achieving the authentication for the user, and providing safe and reliable services to the user. For technical details not described in detail in the embodiment, reference may be made to any one of the preceding embodiments.

FIG. 5 is a flowchart of an authentication method according to an embodiment. As shown in FIG. 5, the method provided in this embodiment includes steps 210 and 220.

In step 210, a stored RID is checked according to an authentication request of an AUSF.

In step 220, authentication information is sent to the AUSF according to a check result.

In this embodiment, the UDM may check whether the UDM stores the RID. If the UDM stores the RID, the stored RID is sent to the AUSF through the authentication information. If the UDM does not store the RID, information about the RID is not sent, or the RID indication information may be sent.

In an embodiment, the authentication information includes the RID.

In this embodiment, the UDM checks whether the UDM stores the RID. If the UDM stores the RID, the RID is sent to the AUSF through the authentication information, and the AUSF can directly determine the RID according to the authentication information.

In an embodiment, the authentication information does not include the RID.

In this embodiment, the RID is not found by the UDM, so the authentication information does not include the RID. The AUSF does not acquire the RID in the authentication information and may select specific few significant digits from the MSIN as the RID.

In an embodiment, the authentication information includes the RID indication information, and the RID indication information is configured for specifying significant digits in the MSIN.

In this embodiment, the RID is not found by the UDM, and the RID indication information is sent to the AUSF through the authentication information to instruct the AUSF to select corresponding significant digits from the MSIN as the RID.

In an embodiment, the authentication information includes an HNPKI.

In an embodiment, the method further includes step 200: receiving the authentication request, where the authentication request includes an SUCI or an SUPI.

An embodiment of the present application further provides a routing indicator determination method that can be applied to the UE or the AUSF. The UE and/or the AUSF determine the valid RID according to authentication information of the UDM and provide valid information to the AAnF, thereby achieving user registration and providing safe and reliable services to the user. For technical details not described in detail in the embodiment, reference may be made to any one of the preceding embodiments. For example, for the process in which the UE determines the RID according to the authentication information of the UDM, reference may be made to the processor in which the AUSF determines the RID according to the authentication information of the UDM in any of the preceding embodiments.

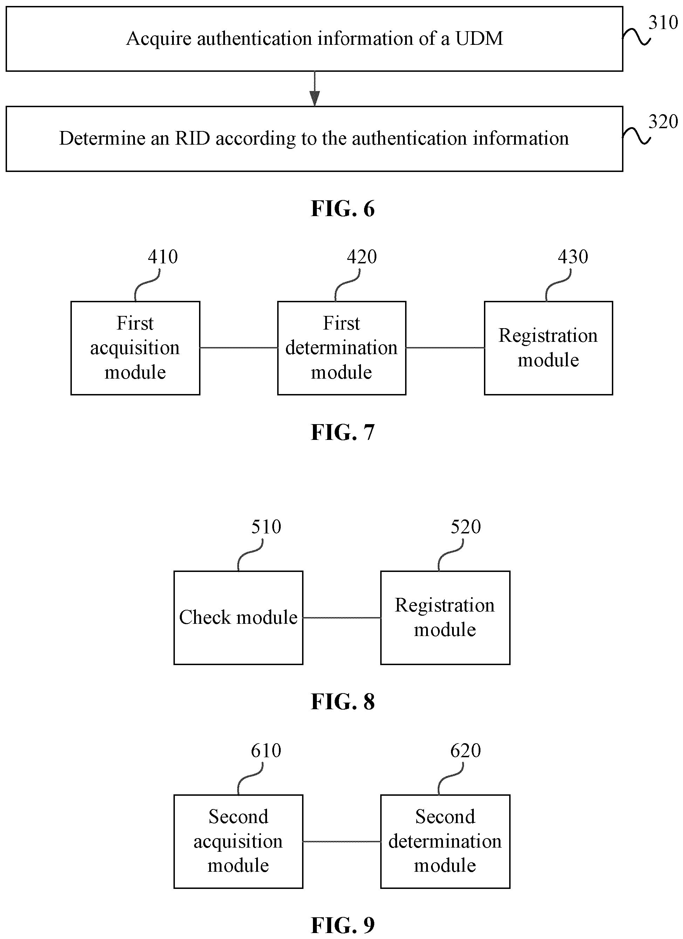

FIG. 6 is a flowchart of a routing indicator determination method according to an embodiment. As shown in FIG. 6, the method provided in this embodiment includes steps 310 and 320.

In step 310, authentication information of a UDM is acquired.

In step 320, an RID is determined according to the authentication information.

In this embodiment, the UE and/or the AUSF acquire the authentication information sent by the UDM. The UDM may check whether the UDM stores the RID. If the UDM stores the RID, the stored RID is sent to the UE through the authentication information. If the UDM does not store the RID, information about the RID is not sent, or the RID indication information may be sent.

In an embodiment, the authentication information includes the RID indication information, and the RID indication information is configured for specifying significant digits in the MSIN.

In this embodiment, the UE and/or the AUSF acquire the authentication information sent by the UDM, the authentication information includes the RID indication information, and the UE and/or the AUSF may select the corresponding significant digits from the MSIN as the RID according to the RID indication information.

In an embodiment, step 320 includes using the corresponding significant digits in the MSIN specified by the RID indication information as the RID.

In this embodiment, the UE and/or the AUSF acquire the authentication information sent by the UDM, the authentication information includes the RID indication information, and the UE and/or the AUSF may use the value of the corresponding significant digits in the MSIN as the RID according to the RID indication information. Reference may be made to FIG. 4.

An embodiment of the present application further provides a registration apparatus. FIG. 7 is a structural diagram of a registration apparatus according to an embodiment. As shown in FIG. 7, the registration apparatus includes a first acquisition module 410, a first determination module 420, and a registration module 430.

The first acquisition module 410 is configured to acquire authentication information of a UDM. The first determination module 420 is configured to determine an RID according to the authentication information. The registration module 430 is configured to send a registration request to a key anchor function according to the RID.

The registration apparatus in this embodiment determines the RID according to the authentication information of the UDM and provides valid information to the AAnF, thereby achieving user registration and providing safe and reliable services to the user.

In an embodiment, the authentication information includes the RID.

In an embodiment, the authentication information does not include the RID; the first determination module 420 is configured to, according to a pre-configured policy or a result of negotiation with a UE, select corresponding significant digits from a MSIN as the RID.

In an embodiment, the step of selecting the corresponding significant digits from the MSIN as the RID includes one of the steps described below.

First significant digits are selected from the MSIN as the RID; corresponding significant digits from a specified position are selected from the MSIN as the RID; and last significant digits are selected from the MSIN as the RID.

In an embodiment, the authentication information includes the RID indication information, and the RID indication information is configured for specifying significant digits in the MSIN.

In an embodiment, the first determination module 420 is configured to use the corresponding significant digits in the MSIN specified by the RID indication information as the RID.

In an embodiment, the authentication information includes an HNPKI.

In an embodiment, the apparatus further includes a request module.

The request module is configured to send an authentication request to the UDM, where the authentication request includes an SUCI or an SUPI.

In an embodiment, the registration module 430 includes a generation module and a registration unit.

The generation module is configured to generate A-KID according to the RID. The registration unit is configured to send the registration request to the key anchor function according to the A-KID.

The registration apparatus provided in this embodiment and the registration method provided in the preceding embodiments belong to the same concept. For technical details not described in detail in this embodiment, reference may be made to any one of the preceding embodiments, and this embodiment has the same effects as the executed registration method.

An embodiment of the present application further provides an authentication apparatus. FIG. 8 is a structural diagram of an authentication apparatus according to an embodiment. As shown in FIG. 8, the authentication apparatus includes a check module 510 and an authentication module 520. The check module 510 is configured to check a stored RID according to an authentication request of an AUSF. The authentication module 520 is configured to send authentication information to the AUSF according to a check result.

The authentication apparatus in this embodiment checks whether the RID is stored and sends the authentication information to the AUSF for the AUSF to determine the RID, thereby providing valid information to the AAnF, achieving the authentication for the user, and providing safe and reliable services to the user.

In an embodiment, the authentication information includes the RID.

In an embodiment, the authentication information does not include the RID.

In an embodiment, the authentication information includes the RID indication information, and the RID indication information is configured for specifying the significant digits in the MSIN. In an embodiment, the authentication information includes an HNPKI.

In an embodiment, the apparatus further includes a request receiving module.

The request receiving module is configured to receive the authentication request, where the authentication request includes an SUCI or an SUPI.

The authentication apparatus provided in this embodiment and the authentication method provided in the preceding embodiments belong to the same concept. For technical details not described in detail in this embodiment, reference may be made to any one of the preceding embodiments, and this embodiment has the same effects as the executed authentication method.

An embodiment of the present application further provides a routing indicator determination apparatus. FIG. 9 is a structural diagram of a routing indicator determination apparatus according to an embodiment. As shown in FIG. 9, the routing indicator determination apparatus includes a second acquisition module 610 and a second determination module 620.

The second acquisition module 610 is configured to acquire authentication information of a UDM. The second determination module 620 is configured to determine an RID according to the authentication information.

The routing indicator determination apparatus in this embodiment determines the RID according to the authentication information of the UDM and provides valid information to the AAnF, thereby achieving user registration and providing safe and reliable services to the user.

In an embodiment, the authentication information includes the RID indication information, and the RID indication information is configured for specifying the significant digits in the MSIN. In an embodiment, the second determination module 620 is configured to use the significant digits in the MSIN specified by the RID indication information as the RID.

The routing indicator determination apparatus provided in this embodiment and the routing indicator determination method provided in the preceding embodiments belong to the same concept. For technical details not described in detail in this embodiment, reference may be made to any one of the preceding embodiments, and this embodiment has the same effects as the executed routing indicator determination method.

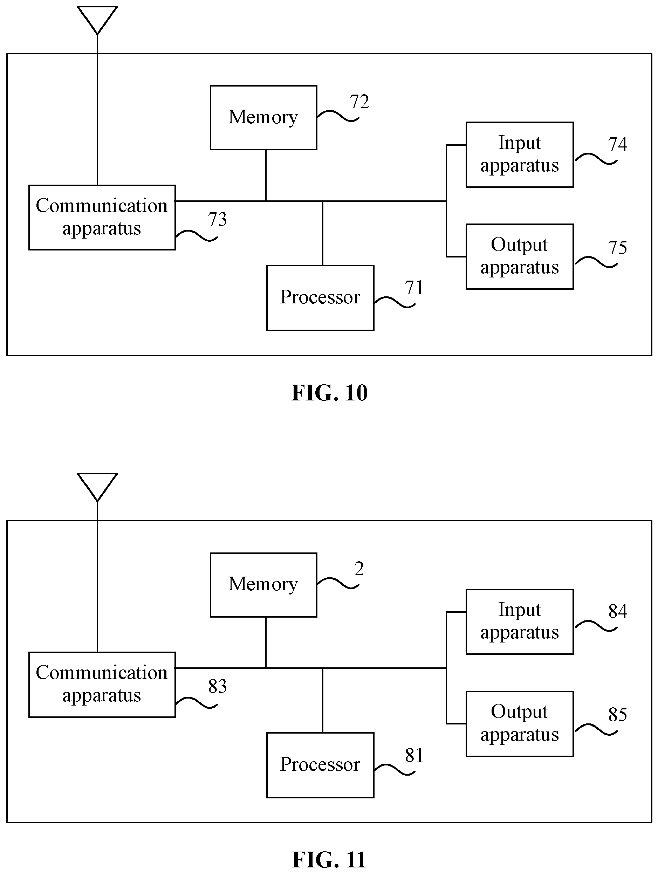

An embodiment of the present application further provides a function. The function in this embodiment is an AUSF or a UDM. FIG. 10 is a structural diagram of hardware of a function according to an embodiment. As shown in FIG. 10, the function provided in the present application includes a memory 72, a processor 71, and a computer program stored in the memory and executable by the processor, where when executing the program, the processor 71 performs the registration method, the authentication method, or the routing indicator determination method described above.

The function may further include the memory 72; one or more processors 71 may be provided in the function, and one processor 71 is used as an example in FIG. 10; the memory 72 is configured to store one or more programs; and when executed by the one or more processors 71, the one or more programs cause the one or more processors 71 to perform the registration method, the authentication method, or the routing indicator determination method in the embodiments of the present application.

The function further includes a communication apparatus 73, an input apparatus 74, and an output apparatus 75.

The processor 71, the memory 72, the communication apparatus 73, the input apparatus 74, and the output apparatus 75 in the function may be connected through a bus or in other manners, and the connection through the bus is used as an example in FIG. 10.

The input apparatus 74 may be configured for receiving input digital or character information and generating keying signal input related to user settings and function control of the functional node. The output apparatus 75 may include display devices such as a display screen.

The communication apparatus 73 may include a receiver and a transmitter. The communication apparatus 73 is configured to perform information transceiving and communication under the control of the processor 71.

As a computer-readable storage medium, the memory 72 may be configured to store software programs, computer-executable programs, and modules such as program instructions/modules (for example, the first acquisition module 420, the first determination module 420, and the registration module 430 in the registration apparatus) corresponding to the registration method described in the embodiments of the present application. The memory 72 may include a program storage region and a data storage region, where the program storage region may store an operating system and an application program required by at least one function, and the data storage region may store data created depending on the use of the function. Additionally, the memory 72 may include a high-speed random-access memory and may also include a nonvolatile memory such as at least one disk memory, a flash memory, or another nonvolatile solid-state memory. In some examples, the memory 72 may include memories which are remotely disposed relative to the processor 71, and these remote memories may be connected to the function via a network. Examples of the preceding network include, but are not limited to, the Internet, an intranet, a local area network, a mobile communication network, and a combination thereof.

An embodiment of the present application further provides a terminal. FIG. 11 is a structural diagram of hardware of a terminal according to an embodiment. As shown in FIG. 11, the terminal provided in the present application includes a memory 82, a processor 81, and a computer program stored in the memory and executable by the processor, where when executing the program, the processor 81 performs the routing indicator determination method described above.

The terminal may further include the memory 82; one or more processors 81 may be provided in the terminal, and one processor 81 is used as an example in FIG. 11; the memory 82 is configured to store one or more programs; and when executed by the one or more processors 81, the one or more programs cause the one or more processors 81 to perform the routing indicator determination method in the embodiments of the present application.

The terminal further includes a communication apparatus 83, an input apparatus 84, and an output apparatus 85.

The processor 81, the memory 82, the communication apparatus 83, the input apparatus 84, and the output apparatus 85 in the terminal may be connected through a bus or in other manners, and the connection through the bus is used as an example in FIG. 11.

The input apparatus 84 may be configured for receiving input digital or character information and generating keying signal input related to user settings and function control of the terminal. The output apparatus 85 may include display devices such as a display screen.

The communication apparatus 83 may include a receiver and a transmitter. The communication apparatus 83 is configured to perform information transceiving and communication under the control of the processor 81.

As a computer-readable storage medium, the memory 82 may be configured to store software programs, computer-executable programs, and modules such as program instructions/modules (for example, the second acquisition module 610 and the second determination module 620 in the routing indicator determination apparatus) corresponding to the routing indicator determination method described in the embodiments of the present application. The memory 82 may include a program storage region and a data storage region, where the program storage region may store an operating system and an application program required by at least one function, and the data storage region may store data created depending on the use of the terminal. Additionally, the memory 82 may include a high-speed random-access memory and may also include a nonvolatile memory such as at least one disk memory, a flash memory, or another nonvolatile solid-state memory. **In** some examples, the memory 82 may include memories which are remotely disposed relative to the processor 81, and these remote memories may be connected to the terminal via a network. Examples of the preceding network include, but are not limited to, the Internet, an intranet, a local area network, a mobile communication network, and a combination thereof.

An embodiment of the present application further provides a storage medium. The storage medium stores a computer program which, when executed by a processor, causes the processor to perform the registration method, the authentication method, or the routing indicator determination method according to any embodiment of the present application. The registration method includes acquiring authentication information of a UDM; determining an RID according to the authentication information; and sending a registration request to a key anchor function according to the RID. The authentication method includes checking a stored RID according to an authentication request of an AUSF; and sending authentication information to the AUSF according to a check result. The routing indicator determination method includes acquiring authentication information of a UDM; determining an RID according to the authentication information; and sending a registration request to a key anchor function according to the RID.

A computer storage medium in the embodiment of the present application may adopt any combination of one or more computer-readable media. The computer-readable media may be computer-readable signal media or computer-readable storage media. A computer-readable storage medium may be, for example, but is not limited to, an electrical, magnetic, optical, electromagnetic, infrared, or semiconductor system, apparatus, or device or any combination thereof. Examples of the computer-readable storage medium include (a non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc ROM (CD-ROM), an optical memory device, a magnetic memory device, or any suitable combination thereof. The computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included in the computer-readable medium may be transmitted in any suitable medium including, but not limited to, a wireless medium, a wire, an optical cable, a radio frequency (RF), or any suitable combination thereof.

Computer program codes for performing the operations of the present application may be written in one or more programming languages or a combination thereof. The programming languages include object-oriented programming languages such as Java, Smalltalk, and C++ and may further include conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In the case related to the remote computer, the remote computer may be connected to the user computer via any type of network including a local area network (LAN) or a wide area network (WAN) or may be connected to an external computer (for example, via the Internet through an Internet service provider).

The term user equipment (UE) encompasses any appropriate type of wireless user device such as a mobile phone, a portable data processing apparatus, a portable web browser or a vehicle-mounted mobile station.

Generally speaking, various embodiments of the present application may be implemented in hardware or special-purpose circuits, software, logic or any combination thereof. For example, some aspects may be implemented in hardware while other aspects may be implemented in firmware or software executable by a controller, a microprocessor or another computing device, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules and functions, or may represent a combination of program steps and logic circuits, modules and functions. Computer programs may be stored in a memory. The memory may be of any type suitable for a local technical environment and may be implemented using any suitable data storage technology, such as, but not limited to, a read-only memory (ROM), a random-access memory (RAM), and an optical memory device and system (a digital video disc (DVD) or a compact disk (CD)). Computer-readable media may include non-transitory storage media. The data processor may be of any type suitable for a local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A registration method, applied to an authentication server function, AUSF, comprising:
receiving authentication information from a unified data management, UDM, the authentication information comprises a routing indicator, RID, or alternatively routing indicator, RID, indication information for specifying significant digits in a mobile subscriber identification number, MSIN;
determining whether the authentication information comprises an RID;
in response to the authentication information comprising the RID, using the RID as a target RID;
in response to the authentication information comprising the RID indication information, using the significant digits in the MSIN specified by the RID indication information as the target RID; and
sending a registration request to a key anchor function according to the target RID.

2. The method of claim 1, wherein the authentication information comprises an authentication credential, preferably wherein the authentication credential is an authentication vector, AV, of an authentication and key agreement, AKA.

3. The method of claim 1, wherein the authentication information comprises a home network key identifier.

4. The method of claim 1, further comprising:
sending an authentication request to the UDM, wherein the authentication request comprises a subscription concealed identifier, SUCI, or a subscription permanent identifier, SUPI.

5. The method of claim 1, wherein sending the registration request to the key anchor function according to the target RID comprises:
generating authentication and key management for applications, AKMA, key identification, A-KID, according to the target RID; and
sending the registration request to the key anchor function according to the A-KID.

6. An authentication server function, AUSF, apparatus, comprising:
a memory operable to store computer-readable instructions; and
a processor circuitry operable to read the computer-readable instructions, the processor circuitry when executing the computer-readable instructions is configured to:
receive authentication information from a unified data management, UDM, the authentication information comprises a routing indicator, RID, or alternatively routing indicator, RID, indication information for specifying significant digits in a mobile subscriber identification number, MSIN;
determine whether the authentication information comprises an RID;
in response to the authentication information comprising the RID, use the RID as a target RID;
in response to the authentication information comprising the RID indication information, use the significant digits in the MSIN specified by the RID indication information as the target RID; and
send a registration request to a key anchor function according to the target RID.

7. A non-transitory machine-readable media, having instructions stored on the machine-readable media, the instructions configured to, when executed, cause a authentication server function, AUSF, machine to:
receive authentication information from a unified data management, UDM, the authentication information comprises a routing indicator, RID, or alternatively routing indicator, RID, indication information for specifying significant digits in a mobile subscriber identification number, MSIN;
determine whether the authentication information comprises an RID;
in response to the authentication information comprising the RID, use the RID as a target RID;
in response to the authentication information comprising the RID indication information, use the significant digits in the MSIN specified by the RID indication information as the target RID; and
send a registration request to a key anchor function according to the target RID.

## Patentansprüche

1. Registrierungsverfahren, das auf eine Authentifizierungsserverfunktion, AUSF, angewendet wird, umfassend:
Empfangen von Authentifizierungsinformationen von einer einheitlichen Datenverwaltung, UDM, wobei die Authentifizierungsinformationen einen Routing-Indikator, RID, oder alternativ Routing-Indikatorangabeinformationen, RID-Angabeinformationen zum Spezifizieren signifikanter Ziffern in einer Mobilfunkteilnehmeridentifikationsnummer, MSIN, umfassen;
Bestimmen, ob die Authentifizierungsinformationen eine RID umfassen;
als Reaktion auf die Authentifizierungsinformationen, umfassend die RID, Verwenden der RID als eine Ziel-RID;
als Reaktion auf die Authentifizierungsinformationen, umfassend die RID-Angabeinformationen, Verwenden der signifikanten Ziffern in der durch die RID-Angabeinformationen spezifizierten MSIN als die Ziel-RID; und
Senden einer Registrierungsanforderung an eine Schlüsselankerfunktion gemäß dem Ziel-RID.

2. Verfahren nach Anspruch 1, wobei die Authentifizierungsinformationen einen Authentifizierungsnachweis umfassen, vorzugsweise wobei der Authentifizierungsnachweis ein Authentifizierungsvektor, AV, einer Authentifizierungs- und Schlüsselvereinbarung, AKA, ist.

3. Verfahren nach Anspruch 1, wobei die Authentifizierungsinformationen eine Heimnetzwerkschlüsselkennung umfassen.

4. Verfahren nach Anspruch 1, ferner umfassend:
Senden einer Authentifizierungsanforderung an die UDM, wobei die Authentifizierungsanforderung eine verborgene Abonnementkennung, SUCI, oder eine permanente Abonnementkennung, SUPI, umfasst.

5. Verfahren nach Anspruch 1, wobei das Senden der Registrierungsanforderung an die Schlüsselankerfunktion gemäß der Ziel-RID umfasst:
Erzeugen einer Anwendungsauthentifizierungs- und Schlüsselverwaltungs, AKMA,-Schlüsselidentifikation, A-KID, gemäß der Ziel-RID; und
Senden der Registrierungsanforderung an die Schlüsselankerfunktion gemäß der A-KID.

6. Authentifizierungsserverfunktionseinrichtung, AUSF-Einrichtung, umfassend:
einen Speicher, der betriebsfähig ist, um computerlesbare Anweisungen zu speichern; und
eine Prozessorschaltung, die betriebsfähig ist, um die computerlesbaren Anweisungen zu lesen, wobei die Prozessorschaltung bei einem Ausführen der computerlesbaren Anweisungen konfiguriert ist zum:
Empfangen von Authentifizierungsinformationen von einer einheitlichen Datenverwaltung, UDM, wobei die Authentifizierungsinformationen einen Routing-Indikator, RID, oder alternativ Routing-Indikatorangabeinformationen, RID-Angabeinformationen zum Spezifizieren signifikanter Ziffern in einer Mobilfunkteilnehmeridentifikationsnummer, MSIN, umfassen;
Bestimmen, ob die Authentifizierungsinformationen einen RID umfassen;
als Reaktion auf die Authentifizierungsinformationen, umfassend den RID, Verwenden des RID als einen Ziel-RID;
als Reaktion auf die Authentifizierungsinformationen, umfassend die RID-Angabeinformationen, Verwenden der signifikanten Ziffern in der durch die RID-Angabeinformationen spezifizierten MSIN als den Ziel-RID; und
Senden einer Registrierungsanforderung an eine Schlüsselankerfunktion gemäß dem Ziel-RID.

7. Nichtflüchtiges maschinenlesbares Medium, das Anweisungen auf dem maschinenlesbaren Medium gespeichert aufweist, wobei die Anweisungen konfiguriert sind, um bei dem Ausführen eine Authentifizierungsserverfunktionsmaschine, AUSF-Maschine, zu veranlassen zum:
Empfangen von Authentifizierungsinformationen von einer einheitlichen Datenverwaltung, UDM, wobei die Authentifizierungsinformationen einen Routing-Indikator, RID, oder alternativ Routing-Indikatorangabeinformationen, RID-Angabeinformationen zum Spezifizieren signifikanter Ziffern in einer Mobilfunkteilnehmeridentifikationsnummer, MSIN, umfassen;
Bestimmen, ob die Authentifizierungsinformationen einen RID umfassen;
als Reaktion auf die Authentifizierungsinformationen, umfassend den RID, Verwenden des RID als einen Ziel-RID;
als Reaktion auf die Authentifizierungsinformationen, umfassend die RID-Angabeinformationen, Verwenden der signifikanten Ziffern in der durch die RID-Angabeinformationen spezifizierten MSIN als den Ziel-RID; und
Senden einer Registrierungsanforderung an eine Schlüsselankerfunktion gemäß dem Ziel-RID.

## Revendications

1. Procédé d'enregistrement, appliqué à une fonction de serveur d'authentification, AUSF, comprenant :
la réception d'informations d'authentification depuis un système de gestion unifiée des données, UDM, les informations d'authentification comprennent un indicateur d'acheminement, RID, ou bien des informations d'indication d'indicateur d'acheminement, RID, pour spécifier des chiffres significatifs dans un numéro d'identification d'abonné mobile, MSIN ;
le fait de déterminer si les informations d'authentification comprennent un RID ;
en réponse au fait que les informations d'authentification comprennent le RID, l'utilisation du RID comme RID cible ;
en réponse au fait que les informations d'authentification comprennent les informations d'indication de RID, l'utilisation des chiffres significatifs dans le MSIN spécifiés par les informations d'indication de RID comme RID cible ; et
l'envoi d'une demande d'enregistrement à une fonction d'ancrage de clé en fonction du RID cible.

2. Procédé selon la revendication 1, dans lequel les informations d'authentification comprennent une légitimation d'authentification, de préférence dans lequel la légitimation d'authentification est un vecteur d'authentification, AV, d'une authentification et d'un accord de clé, AKA.

3. Procédé selon la revendication 1, dans lequel les informations d'authentification comprennent un identifiant de clé de réseau domestique.

4. Procédé selon la revendication 1, comprenant en outre :
l'envoi d'une demande d'authentification à l'UDM, dans lequel la demande d'authentification comprend un identifiant caché d'abonnement, SUCI, ou un identifiant permanent d'abonnement, SUPI.

5. Procédé selon la revendication 1, dans lequel l'envoi de la demande d'enregistrement à la fonction d'ancrage de clé en fonction du RID cible comprend :
la génération d'une identification de clé pour l'authentification et la gestion de clés pour les applications, AKMA, A-KID, en fonction du RID cible ; et
l'envoi de la demande d'enregistrement à la fonction d'ancrage de clé en fonction de l'A-KID.

6. Appareil de fonction de serveur d'authentification, AUSF, comprenant :
une mémoire capable de stocker des instructions lisibles par ordinateur ; et
un ensemble de circuits de processeur capable de lire les instructions lisibles par ordinateur, l'ensemble de circuits de processeur, lors de l'exécution des instructions lisibles par ordinateur, est configuré pour :
recevoir des informations d'authentification depuis un système de gestion unifiée des données, UDM, les informations d'authentification comprennent un indicateur d'acheminement, RID, ou bien des informations d'indication d'indicateur d'acheminement, RID, pour spécifier des chiffres significatifs d'un numéro d'identification d'abonné mobile, MSIN ;
déterminer si les informations d'authentification comprennent un RID ;
en réponse au fait que les informations d'authentification comprennent le RID, utiliser le RID comme RID cible ;
en réponse au fait que les informations d'authentification comprennent les informations d'indication de RID, utiliser les chiffres significatifs dans le MSIN spécifiés par les informations d'indication de RID comme RID cible ; et
envoyer une demande d'enregistrement à une fonction d'ancrage de clé en fonction du RID cible.

7. Support non transitoire lisible par machine, ayant des instructions stockées sur le support lisible par machine, les instructions étant configurées pour, lorsqu'elles sont exécutées, amener une machine de fonction de serveur d'authentification, AUSF, à :
recevoir des informations d'authentification depuis un système de gestion unifiée des données, UDM, les informations d'authentification comprennent un indicateur d'acheminement, RID, ou bien des informations d'indication d'indicateur d'acheminement, RID, pour spécifier des chiffres significatifs d'un numéro d'identification d'abonné mobile, MSIN ;
déterminer si les informations d'authentification comprennent un RID ;
en réponse au fait que les informations d'authentification comprennent le RID, utiliser le RID comme RID cible ;
en réponse au fait que les informations d'authentification comprennent les informations d'indication de RID, utiliser les chiffres significatifs dans le MSIN spécifiés par les informations d'indication de RID comme RID cible ; et
envoyer une demande d'enregistrement à une fonction d'ancrage de clé en fonction du RID cible.
